(19) Europäisches Patentamt
European Patent Office
Office européen des brevets

(11) **EP 1 110 407 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **99942772.7**

(22) Anmeldetag: **01.07.1999**

(51) Int Cl.[7]: **H04N 7/26**, H04N 7/36

(86) Internationale Anmeldenummer:
**PCT/DE99/01964**

(87) Internationale Veröffentlichungsnummer:
**WO 00/11874 (02.03.2000 Gazette 2000/09)**

(54) **VERFAHREN UND ANORDNUNG ZUR CODIERUNG UND DECODIERUNG EINES DIGITALISIERTEN BILDES MIT ANWENDUNG EINES GESAMTBEWEGUNGSVEKTORS**

METHOD AND ARRAY FOR CODING AND DECODING A DIGITIZED IMAGE USING AN OVERALL MOTION VECTOR

PROCEDE ET DISPOSITIF POUR LE CODAGE ET LE DECODAGE D'UNE IMAGE NUMERISEE FAISANT APPEL A UN VECTEUR DE DEPLACEMENT TOTAL

(84) Benannte Vertragsstaaten:
**DE FR GB IT NL SE**

(30) Priorität: **18.08.1998 DE 19837406**

(43) Veröffentlichungstag der Anmeldung:
**27.06.2001 Patentblatt 2001/26**

(73) Patentinhaber: **SIEMENS AKTIENGESELLSCHAFT**
**80333 München (DE)**

(72) Erfinder:
• **BÄSE, Gero**
**D-81739 München (DE)**
• **PANDEL, Jürgen**
**D-83620 Feldkirchen-Westerham (DE)**

(56) Entgegenhaltungen:
**EP-A- 0 414 016**   **EP-A- 0 849 950**
**WO-A-92/05662**   **US-A- 4 636 862**

**Beschreibung**

Aus [1] ist ein blockbasiertes Bildcodierungsverfahren bekannt.

Bei diesem Bildcodierungsverfahren weist ein zu codierendes Bild Bildpunkte auf, denen Codierungsinformation zugeordnet wird.

Unter Codierungsinformation ist im weiteren Luminanzinformation (Helligkeitsinformation) oder Chrominanzinformation (Farbinformation) zu verstehen.

Die Bildpunkte werden zu Bildblöcken gruppiert, die üblicherweise 8*8 Bildpunkte oder 16*16 Bildpunkte enthalten. Die Bildblöcke werden zu Makroblökken gruppiert. Ein Makroblock weist vier Bildblöcke mit Luminanzinformation und zwei Bildblöcke mit Chrominanzinformation auf.

Zur Codierung wird bei dem Verfahren aus [1] ein sogenanntes hybrides Bildcodierungsverfahren verwendet. Darunter ist ein Verfahren zu verstehen, bei dem zum einen für die Bildblöcke eine diskrete Cosinustransformation ausgeführt wird und lediglich Spektralkoeffizienten übertragen werden und zum anderen versucht wird, in aufeinander folgenden digitalisierten Bildern enthaltene Redundanzinformation nicht mehr zu übertragen.

Unter der Redundanziriformation ist anschaulich Codierungsinformation zu verstehen, die schon in einem zeitlich vorangegangenen Bild übertragen wurde.

Es wird in diesem Zusammenhang eine Verschiebungsinformation übertragen. Dies bedeutet, daß ermittelt wird, wie sich ein Bildblock von einem zeitlich vorangegangenen Bild zu dem zu codierenden Bild innerhalb des Bildes örtlich verschoben hat. Diese Verschiebung wird in Form eines Vektors, dem Bewegungsvektor, für jeden zu codierenden Bildblock ermittelt und codiert. Dieses Verfahren wird als Bewegungsschätzung bezeichnet.

Ein weiteres Bildcodierungsverfahren ist aus [2] behannt, bei dem eine Prädiktionsbild getrennt nach Objeht, Hintergrund und Freiwerdenden Hintergrund erstellt wird.

Der Erfindung liegt das Problem zugrunde, ein Verfahren und eine Anordnung zur Codierung sowie zur Decodierung eines digitalisierten Bildes anzugeben, mit einem geringeren Bedarf an digitaler Information zur Beschreibung des digitalisierten Bildes als bei bekannten Verfahren, ohne den subjektiven Qualitätseindruck des rekonstruierten Bildes wesentlich zu verschlechtern.

Das Problem wird durch das Verfahren gemäß Patentanspruch 1, das Verfahren gemäß Patentanspruch 2, die Anordnung gemäß Patentanspruch 6 sowie die Anordnung gemäß Patentanspruch 7 gelöst.

Bei dem Verfahren zur Codierung eines digitalisierten Bildes mit Bildpunkten, denen Codierungsinformation zugeordnet ist, sind die Bildpunkte in Bildblöcke gruppiert. Die Bildblöcke sind zu mindestens einem ersten Bereich und einem zweiten Bereich gruppiert. Es wird ein Gesamtbewegungsvektor ermittelt, mit dem eine Verschiebung des ersten Bereichs im Vergleich zu dem ersten Bereich in einem zeitlich vorangegangen Vorgängerbild und/oder im Vergleich zu dem ersten Bereich in einem zeitlich nachfolgenden Nachfolgebild beschrieben wird. Der Gesamtbewegungsvektor wird zumindest einem Teil der Bildblöcke des zweiten Bildbereichs zugeordnet. Für jeden Bildblock des ersten Bildbereichs wird jeweils ein Bewegungsvektor ermittelt und dem Bildblock zugeordnet. Es werden Decodierungsinformationen der Bildblöcke, die Bewegungsvektoren sowie die Gesamtbewegungsvektoren codiert.

Bei dem Verfahren zur Decodierung eines komprimierten Bildes mit Bildpunkten, denen Codierungsinformation zugeordnet ist, sind die Bildpunkte in Bildblöcke gruppiert. Die Bildblöcke sind in mindestens einen ersten Bildbereich und einen zweiten Bildbereich gruppiert. Die Bildblöcke, Bewegungsvektroren von Bildblöcken des ersten Bereichs und ein Gesamtbewegungsvektor sind codiert. Mit dem Gesamtbewegungsvektor wird eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgebild beschrieben. Die Decodierung erfolgt derart, daß der Gesamtbewegungsvektor zur Decodierung zumindest eines Teils der Bildblöcke des zweiten Bildbereichs verwendet wird.

Eine Anordnung zur Codierung eines digitalisierten Bildes mit Bildpunkten, denen Codierungsinformation zugeordnet ist, weist einen Prozessor auf, der derart eingerichtet ist, daß folgende Schritte durchführbar sind:

- die Bildpunkte sind in Bildblöcke gruppiert,
- die Bildblöcke sind zumindest in einem ersten Bildbereich und einem zweiten Bildbereich gruppiert,
- ein Gesamtbewegungsvektor wird ermittelt, mit dem eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgerbild beschrieben wird,
- der Gesamtbewegungsvektor wird zumindest einem Teil der Bildblöcke des zweiten Bildbereichs zugeordnet,
- für jeden Bildblock des ersten Bildbereichs wird jeweils ein Bewegungsvektor ermittelt und dem Bildblock zugeordnet, und
- die Codierungsinformation der Bildblöcke, die Bewegungsvektoren und der Gesamtbewegungsvektor werden codiert.

Die Anordnung zur Decodierung eines komprimierten Bildes mit Bildpunkten, denen Codierungsinformation zugeordnet ist, weist einen Prozessor auf, der derart eingerichtet ist, daß folgende Schritte durchführbar sind:

- die Bildpunkte sind in Bildblöcke gruppiert,
- die Bildblöcke sind in mindestens einen ersten Bildbereich und einen zweiten Bildbereich gruppiert,
- die Bildblöcke, Bewegungsvektoren von Bildblöcken des ersten Bildbereichs und ein Gesamtbewegungsvektor sind codiert,
- mit dem Gesamtbewegungsvektor wird eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgebild beschrieben,
- die Decodierung erfolgt derart, daß der Gesamtbewegungsvektor zur Dekompression zumindest eines Teils der Bildblöcke des zweiten Bildbereichs verwendet wird.

Durch die Erfindung wird die erforderliche Datenrate zur Übertragung digitalisierter Bilder reduziert bzw. die insgesamt verfügbare Datenrate kann besser ausgenutzt werden, was zur Verbesserung der Bildqualität genutzt werden kann.

Vorteilhafte Weiterbildungen der Erfindung ergeben sich aus den abhängigen Ansprüchen.

Es ist in einer Weiterbildung vorteilhaft, den Gesamtbewegungsvektor aus Bewegungsvektoren von Bildblöcken des ersten Bildbereichs zu ermitteln. Der Gesamtbewegungsvektor beschreibt auf diese Weise genauer die Verschiebung des ersten Bildbereichs, wodurch die Qualität des decodierten und rekonstruierten Bildes verbessert wird.

Eine weitere Verbesserung ergibt sich, wenn der Gesamtbewegungsvektor aus Bewegungsvektoren von Bildblöcken des ersten Bildbereichs ermittelt wird, die im wesentlichen an einem Rand des ersten Bildbereichs liegen.

Ein Ausführungsbeispiel der Erfindung ist in den Figuren dargestellt und wird im weiteren näher erläutert.

Es zeigen

Figur 1  eine Skizze, in der das der Erfindung zugrundeliegende Prinzip veranschaulicht ist;

Figur 2  eine Anordnung zweier Rechner, einer Kamera und eines Bildschirms, mit denen die Codierung, die Übertragung sowie die Decodierung und Darstellung der Bilddaten erfolgen;

Figur 3  eine Skizze einer Vorrichtung zur blockbasierten Codierung eines digitalisierten Bildes;

Figur 4  ein Ablaufdiagramm, in dem die Verfahrensschritte zur Codierung, Übertragung und Decodierung eines digitalisierten Bildes dargestellt sind.

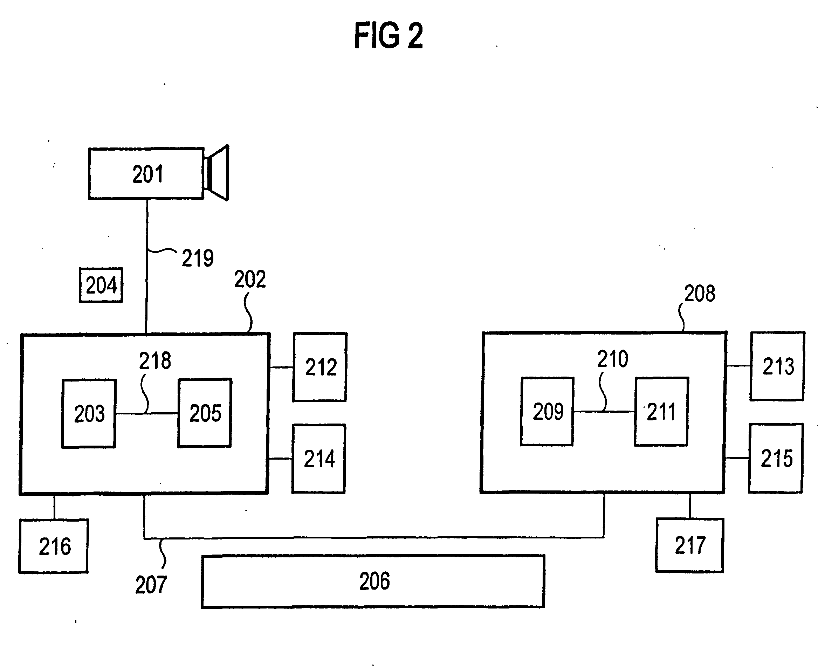

In **Fig.2** ist eine Anordnung dargestellt, die zwei Rechner 202, 208 und eine Kamera 201 umfaßt, wobei Bildcodierung, Übertragung der Bilddaten und Bilddecodierung veranschaulicht werden.

Eine Kamera 201 ist mit einem ersten Rechner 202 über eine Leitung 219 verbunden. Die Kamera 201 übermittelt aufgenommene Bilder 204 an den ersten Rechner 202. Der erste Rechner 202 verfügt über einen ersten Prozessor 203, der über einen Bus 218 mit einem Bildspeicher 205 verbunden ist. Mit dem ersten Prozessor 203 des ersten Rechners 202 wird ein Verfahren zur Bildcodierung durchgeführt. Auf diese Art codierte Bilddaten 206 werden von dem ersten Rechner 202 über eine Kommunikationsverbindung 207, vorzugsweise eine Leitung oder eine Funkstrecke, zu einem zweiten Rechner 208 übertragen. Der zweite Rechner 208 enthält einen zweiten Prozessor 209, der über einen Bus 210 mit einem Bildspeicher 211 verbunden ist. Mit dem zweiten Prozessor 209 wird ein Verfahren zur Bilddecodierung durchgeführt.

Sowohl der erste Rechner 202 als auch der zweite Rechner 208 verfügen jeweils über einen Bildschirm 212 bzw. 213, auf dem die Bilddaten 204 visualisiert werden, wobei die Visualisierung auf dem Bildschirm 212 des ersten Rechners 202 üblicherweise nur zu Kontrollzwecken erfolgt. Zur Bedienung sowohl des ersten Rechners 202 als auch des zweiten Rechners 208 sind jeweils Eingabeeinheiten vorgesehen, vorzugsweise eine Tastatur 214 bzw. 215, sowie eine Computermaus 216 bzw. 217.

Die Bilddaten 204, die von der Kamera 201 über die Leitung 219 zu dem ersten Rechner 202 übertragen werden, sind Daten im Zeitbereich, während die Daten 206, die von dem ersten Rechner 202 zu dem zweiten Rechner 208 über die Kommunikationsverbindung 207 übertragen werden, Bilddaten im Spektralbereich sind.

Auf dem Bildschirm 213 werden die decodierten Bilddaten dargestellt.

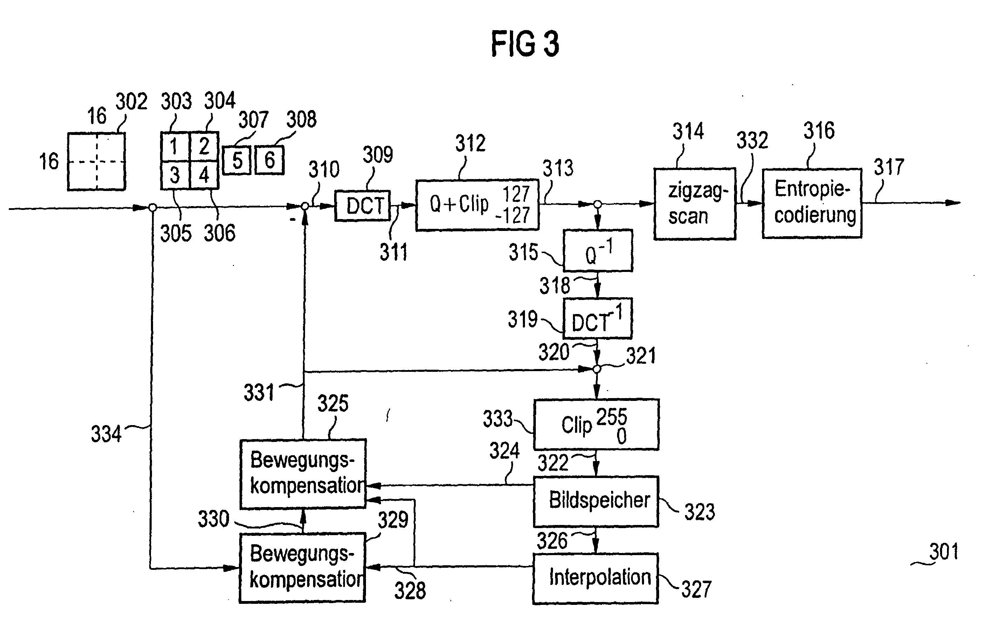

**Fig.3** zeigt eine Skizze einer Anordnung zur Durchführung eines blockbasierten Bildcodierverfahrens gemäß H.263-Standard.

Ein zu codierender Videodatenstrom mit zeitlich aufeinanderfolgenden digitalisierten Bildern wird einer Bildcodierungseinheit 301 zugeführt. Die digitalisierten Bilder sind unterteilt in Makroblöcke 302, wobei jeder Makroblock 16x16 Bildpunkte enthält. Der Makroblock 302 umfaßt 4 Bildblöcke 303, 304, 305 und 306, wobei jeder Bildblock 8x8 Bildpunkte, denen Luminanzwerte (Helligkeitswerte) zugeordnet sind, enthält. Weiterhin umfaßt jeder Makroblock 302 zwei Chrominanzblöcke 307 und 308 mit den Bildpunkten zugeordneten Chrominanzwerten (Farbinformation, Farbsättigung).

Der Block eines Bildes enthält einen Luminanzwert (=Helligkeit), einen ersten Chrominanzwert (=Farbton) und einen zweiten Chrominanzwert (=Farbsättigung). Dabei werden Luminanzwert, erster Chrominanzwert und zweiter Chrominanzwert als Farbwerte bezeichnet.

Die Bildblöcke werden einer Transformationscodierungseinheit 309 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 310 der Transformationscodierungseinheit (Diskrete Cosinus Transformation, DCT) 309 zugeführt. Dazu wird über eine Verbindung 334 der aktuelle Makroblock 302 einer Bewegungsschätzungseinheit 329 mitgeteilt. In der Transformationscodierungseinheit 309 werden für die zu codierenden Bildblöcke bzw. Differenzbildblöcke Spektralkoeffizienten 311 gebildet und einer Quantisierungseinheit 312 zugeführt.

Quantisierte Spektralkoeffizienten 313 werden sowohl einer Scaneinheit 314 als auch einer inversen Quantisierungseinheit 315 in einem Rückwärtspfad zugeführt. Nach einem Scanverfahren, z.B. einem "zigzag"-Scanverfahren, wird auf den gescannten Spektralkoeffizienten 332 eine Entropiecodierung in einer dafür vorgesehenen Entropiecodierungseinheit 316 durchgeführt. Die entropiecodierten Spektralkoeffizienten werden als codierte Bilddaten 317 über einen Kanal, vorzugsweise eine Leitung oder eine Funkstrecke, zu einem Decoder übertragen.

In der inversen Quantisierungseinheit 315 erfolgt eine inverse Quantisierung der quantisierten Spektralkoeffizienten 313. So gewonnene Spektralkoeffizienten 318 werden einer inversen Transformationscodierungseinheit 319 (Inverse Diskrete Cosinus Transformation, IDCT) zugeführt. Rekonstruierte Codierungswerte (auch Differenzcodierungswerte) 320 werden im Differenzbildmodus einem Addierer 321 zugeführt. Der Addierer 321 erhält ferner Codierungswerte eines Bildblocks, die sich aus einem zeitlich vorangegangenen Bild nach einer bereits durchgeführten Bewegungskompensation ergeben. Mit dem Addierer 321 werden rekonstruierte Bildblöcke 322 gebildet und in einem Bildspeicher 323 abgespeichert.

Chrominanzwerte 324 der rekonstruierten Bildblöcke 322 werden aus dem Bildspeicher 323 einer Bewegungskompensationseinheit 325 zugeführt. Für Helligkeitswerte 326 erfolgt eine Interpolation in einer dafür vorgesehenen Interpolationseinheit 327. Anhand der Interpolation wird die Anzahl in dem jeweiligen Bildblock enthaltener Helligkeitswerte vorzugsweise vervierfacht. Alle Helligkeitswerte 328 werden sowohl der Bewegungskompensationseinheit 325 als auch der Bewegungsschätzungseinheit 329 zugeführt. Die Bewegungsschätzungseinheit 329 erhält außerdem die Bildblöcke des jeweils zu codierenden Makroblocks (16x16 Bildpunkte) über die Verbindung 334. In der Bewegungsschätzungseinheit 329 erfolgt die Bewegungsschätzung unter Berücksichtigung der interpolierten Helligkeitswerte ("Bewegungsschätzung auf Halbpixelbasis").

Das Ergebnis der Bewegungsschätzung ist ein Bewegungsvektor 330, durch den eine örtliche Verschiebung des ausgewählten Makroblocks aus dem zeitlich vorangegangenen Bild zu dem zu codierenden Makroblock 302 zum Ausdruck kommt.

Sowohl Helligkeitsinformation als auch Chrominanzinformation bezogen auf den durch die Bewegungsschätzungseinheit 329 ermittelten Makroblock werden um den Bewegungsvektor 330 verschoben und von den Codierungswerten des Makroblocks 302 subtrahiert (siehe Datenpfad 231).

Als Ergebnis der Bewegungsschätzung ergibt sich somit der Bewegungsvektor 330 mit zwei Bewegungsvektorkomponenten, einer ersten Bewegungsvektorkomponente $BV_x$ und einer zweiten Bewegungsvektorkomponente $BV_y$ entlang der ersten Richtung x und der zweiten Richtung y:

$$BV = \begin{pmatrix} BV_x \\ BV_y \end{pmatrix}.$$

Der Bewegungsvektor 330 wird dem Bildblock zugeordnet.

Die Bildcodierungseinheit aus Figur 3 liefert somit für alle Bildblöcke bzw. Makrobildblöcke einen Bewegungsvektor 330.

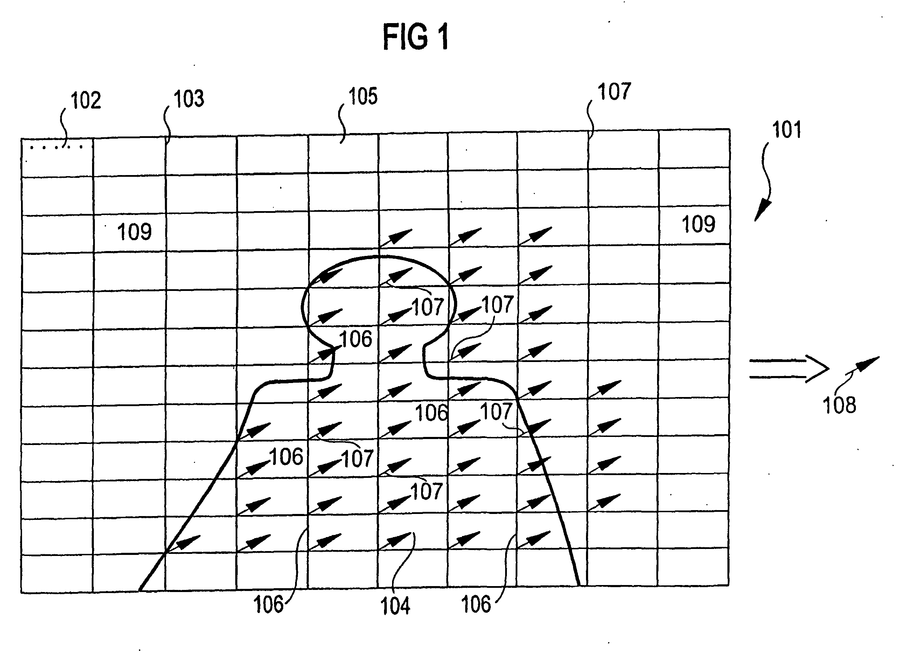

In **Fig. 1** ist das der Erfindung zugrundeliegende Prinzip veranschaulicht.

Ein digitalisiertes Bild 101 weist Bildpunkte 102 auf, die in Bildblöcke 103 gruppiert sind. Die Bildblöcke sind in einen ersten Bildbereich 104 und einen zweiten Bildbereich 105 gruppiert.

Der erste Bildbereich 104 stellt einen sich stark bewegenden Bildvordergrund dar. Der zweite Bildbereich 105 stellt einen Bildhintergrund dar, der sich nur relativ wenig zwischen direkt aufeinanderfolgenden Bildern ändert.

Für jeden Bildblock 106 des ersten Bildbereichs 104 wird eine Bewegungsschätzung durchgeführt und es wird ein Bewegungsvektor 107 für jeden Bildblock 106 des ersten Bildbereichs 104 ermittelt.

Die Bewegungsschätzung erfolgt derart, daß ausgehend von einem Startgebiet mit der Größe und Form des ersten Bildblocks, wird, jeweils verschoben um einen Bildpunktabstand bzw. um einen Bruchteil bzw. ein Vielfaches eines Bildpunktabstandes, vorzugsweise einen halben Bildpunktabstand (Halbbildpunkt-Bewegungsschätzung), um den jeweils das Startgebiet verschoben wird, folgender Fehler E ermittelt:

$$E = \sum_{i=1}^{n} \sum_{j=1}^{m} \left| x_{i,j} - y_{i,j} \right|,$$

wobei mit

- i, j Laufindizes,
- n eine Anzahl von Bildpunkten in dem ersten Bildblock entlang einer ersten Richtung,
- m eine Anzahl von Bildpunkten, in dem ersten Bildblock entlang einer zweiten Richtung,
- $x_{i,j}$ die Codierungsinformation des Bildpunkts an der Position i, j innerhalb des erste Bildblocks,
- $y_{i,j}$ die Codierungsinformation des Bildpunkts an der entsprechenden Stelle in dem zeitlich vorangegangenen Bild, verschoben um den entsprechenden Bewegungsvektor,

bezeichnet werden.

Der Fehler E wird für jede Verschiebung in dem zeitlich vorangegangenen Bild durchgeführt und es wird der Bildblock derjenigen Verschiebung (= Bewegungsvektor) als dem ersten Bildblock am ähnlichsten ausgewählt, dessen Fehler E den geringsten Wert aufweist.

Aus den Bewegungsvektoren 107, die den Bildblöcken 106 des ersten Bildbereichs 104 zugeordnet sind, wird ein Gesamtbewegungsvektor 108 ermittelt.

Vorzugsweise werden hierfür die Bewegungsvektoren von Bildblöcken 106 des ersten Bildbereichs 104 berücksichtigt, die sich im wesentlichen am Rand des ersten Bildbereichs 104 befinden.

Die Bildung des Gesamtbewegungsvektors 108 erfolgt durch Mittelwertbildung der berücksichtigten Bewegungsvektoren.

Der Gesamtbewegungsvektor 108 beschreibt die Verschiebung des gesamten ersten Bildbereichs 104 zwischen zwei zeitlich aufeinanderfolgenden Bildern.

Der Gesamtbewegungsvektor 108 wird für die Codierung bzw. Decodierung allen Bildblöcken des zweiten Bildbereichs zugeordnet, d.h. der Gesamtbewegungsvektor 108 wird als ein einheitlicher Bewegungsvektor für den zweiten Bildbereich 105, d.h. den Bildhintergrund, verwendet.

Anschaulich wird damit der zweite Bildbereich 105, d.h. der Bildhintergrund, als ganzes verschoben. Fehler treten nur noch an den Bildrändern auf, wo sie jedoch nur gering wahrgenommen werden.

Es wird angenommen, daß die Bildblöcke des zweiten Bildbereichs bereits mit ausreichender Qualität codiert worden sind.

Hierzu wird für jeden neuen codierten Bildblock durch Vergleich mit dem zeitlich vorangegangenen Bildblock ein Qualitätsmaß bestimmt, wiederum durch Bildung der Summe absoluter Differenzen über die Codierungsinformation der einzelnen Bildpunkte.

Das oben beschriebene Verfahren wird in der Bewegungsschätzungseinheit 329 durchgeführt.

Es werden also lediglich die Bewegungsvektoren 107 der Bildblöcke des ersten Bildbereichs sowie der Gesamtbewegungsvektor 108 codiert und übertragen.

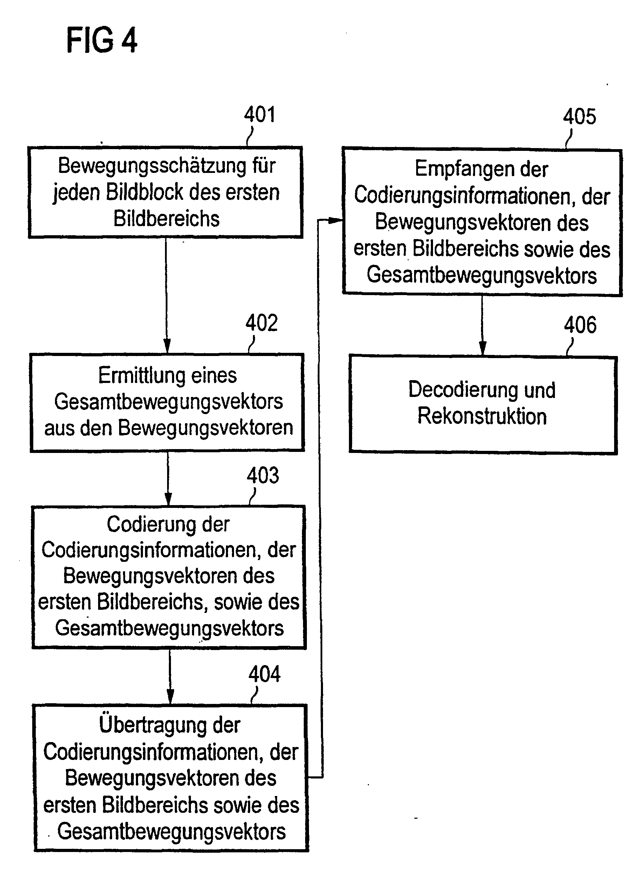

**Fig.4** zeigt ein Ablaufdiagramm, in dem die einzelnen Verfahrensschritte des Ausführungsbeispiels noch einmal dargestellt sind.

In einem ersten Schritt (Schritt 401) wird für jeden Bildblock des ersten Bildbereichs eine Bewegungsschätzung durchgeführt, wodurch ein Bewegungsvektor für jeden Bildblock des ersten Bildbereichs ermittelt wird.

In einem zweiten Schritt wird aus zumindest einem Teil der Bewegungsvektoren der Bildblöcke des ersten Bildbereichs ein Gesamtbewegungsvektor ermittelt (Schritt 402).

Es werden die Codierungsinformationen, die Bewegungsvektoren 107 der Bildblöcke 106 des ersten Bildbereichs 104 sowie der Gesamtbewegungsvektor 108 codiert (Schritt 403).

Die Codierungsinformation, der Gesamtbewegungsvektor und die Bewegungsvektoren der Bildblöcke des ersten Bildbereichs werden in einem weiteren Schritt (Schritt 404) übertragen.

Nach Empfang der codierten Bilddaten (Schritt 405) werden die Codierungsinformationen, die Bewegungsvektoren 107 der Bildblöcke 106 des ersten Bildbereichs 104 sowie der Gesamtbewegungsvektor 108 decodiert und das Bild 101 rekonstruiert (Schritt 406).

Bei der Rekonstruktion des Bildes 101 wird der Gesamtbewegungsvektor 108 für alle Bildblöcke 109 des zweiten Bildbereichs 105 verwendet.

Somit wird die Codierung, Übertragung bzw. Speicherung von Bewegungsvektoren von Bildblöcken des zweiten Bildbereichs vermieden, was zu einer erheblichen Einsparung erforderlicher Datenrate führt.

Im weiteren werden Alternativen des oben beschriebenen Ausführungsbeispiels erläutert:

Die Art der Bewegungsschätzung ist für die Erfindung nicht wesentlich, d.h. es kann eine beliebige Methode zur Bewegungsschätzung eingesetzt werden.

Auch die Bildung des Gesamtbewegungsvektors aus den Bewegungsvektoren des ersten Bildbereichs ist nicht für die Erfindung wesentlich, d.h. es kann eine Mittelwertbildung, eine gewichtete Mittelwertbildung oder auch nur ein Bewegungsvektor, der als Repräsentant aller Bewegungsvektoren der Bildblöcke des ersten Bildbereichs angesehen wird, als Gesamtbewegungsvektor verwendet werden.

An den Bildrändern durch das Verfahren fehlende Bildinformationen kann bei der Übertragung nachfolgender Bilder mit geringerer Bewegung wieder aufgebaut werden oder auch aus einem Hintergrundspeicher eingelesen werden, in dem die entsprechende Bildinformation von zeitlich vorangegangenen Bildern gespeichert ist.

Ferner ist die Erfindung nicht auf zwei Bildbereiche beschränkt. Es können mehrere Bildbereiche vorhanden sein, denen Bildblöcke zugeordnet sind, beispielsweise mehrere unabhängige Objekte, die einen bewegten Vordergrund bilden. In diesem Fall wird ein Bildobjekt ausgewählt, für den dann ein Gesamtbewegungsvektor ermittelt wird, mit dem der Bildbereich, der den Hintergrund beschreibt, verschoben wird.

Gemäß dem Ausführungsbeispiel wird der Fehler E aus der Summe der absoluten Differenzen gebildet. Der Fehler E kann aber auch aus der Summe der quadratischen Differenzen oder aus der Summe von Differenzen höherer Potenzen gebildet werden. Dies gilt entsprechend für die Bildung des Qualitätsmaßes.

Im Rahmen dieses Dokuments wurden folgende Veröffentlichungen zitiert:

[1] ITU-T Draft Recommendation H.263, Video Coding for Low Bitrate Communiation, May, 1996
[2] EP-A-0 414 016

**Patentansprüche**

1. Verfahren zur Codierung eines digitalisierten Bildes mit Bildpunkten, denen Codierungsinformation zugeordnet ist,

   - bei dem die Bildpunkte in Bildblöcke gruppiert sind,
   - bei dem die Bildblöcke zu mindestens einem ersten Bildbereich und einem zweiten Bildbereich gruppiert sind,
   - bei dem ein Gesamtbewegungsvektor ermittelt wird, mit dem eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgerbild beschrieben wird,
   - bei dem der Gesamtbewegungsvektor zumindest einem Teil der Bildblöcke des zweiten Bildbereichs zugeordnet wird,
   - bei dem für jeden Bildblock des ersten Bildbereichs jeweils ein Bewegungsvektor ermittelt und dem Bildblock zugeordnet wird, und
   - bei dem die Codierungsinformation der Bildblöcke, die Bewegungsvektoren und der Gesamtbewegungsvektor codiert werden.

2. Verfahren zur Decodierung eines komprimierten Bildes mit Bildpunkten, denen Codierungsinformation zugeordnet ist,

   - bei dem die Bildpunkte in Bildblöcke gruppiert sind,

   - bei dem die Bildblöcke in mindestens einen ersten Bildbereich und einen zweiten Bildbereich gruppiert sind,
   - bei dem die Bildblöcke, Bewegungsvektoren von Bildblöcken des ersten Bildbereichs und ein Gesamtbewegungsvektor codiert sind,
   - bei dem mit dem Gesamtbewegungsvektor eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgerbild beschrieben wird,
   - bei dem die Decodierung derart erfolgt, daß der Gesamtbewegungsvektor zur Decodierung zumindest eines Teils der Bildblöcke des zweiten Bildbereichs verwendet wird.

3. Verfahren nach Anspruch 1 oder 2, bei dem der Gesamtbewegungsvektor aus Bewegungsvektoren von Bildblöcken des ersten Bildbereichs ermittelt wird.

4. Verfahren nach Anspruch 3, bei dem der Gesamtbewegungsvektor durch Bildung eines Mittelwerts der Bewegungsvektoren von Bildblöcken des ersten Bildbereichs ermittelt wird.

5. Verfahren nach Anspruch 3 oder 4, bei dem der Gesamtbewegungsvektor aus Bewegungsvektoren von Bildblöcken des ersten Bildbereichs ermittelt wird, die im wesentlichen an einem Rand des ersten Bildbereichs liegen.

6. Anordnung zur Codierung eines digitalisierten Bildes mit Bildpunkten, denen Codierungsinformation zugeordnet ist, mit einem Prozessor (202, 203), der derart eingerichtet ist, daß folgende Schritte durchführbar sind:

   - die Bildpunkte sind in Bildblöcke gruppiert,
   - die Bildblöcke sind zu mindestens einem ersten Bildbereich und einem zweiten Bildbereich gruppiert,
   - ein Gesamtbewegungsvektor wird ermittelt, mit dem eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgerbild beschrieben wird,
   - der Gesamtbewegungsvektor wird zumindest einem Teil der Bildblöcke des zweiten Bildbereichs zugeordnet,
   - für jeden Bildblock des ersten Bildbereichs wird jeweils ein Bewegungsvektor ermittelt und dem Bildblock zugeordnet, und

- die Codierungsinformation der Bildblöcke, die Bewegungsvektoren und der Gesamtbewegungsvektor werden codiert.

**7.** Anordnung zur Decodierung eines komprimierten Bildes mit Bildpunkten, denen Codierungsinformation zugeordnet ist, mit einem Prozessor (208, 209), der derart eingerichtet ist, daß folgende Schritte durchführbar sind:

- die Bildpunkte sind in Bildblöcke gruppiert,
- die Bildblöcke sind in mindestens einen ersten Bildbereich und einen zweiten Bildbereich gruppiert,
- die Bildblöcke, Bewegungsvektoren von Bildblöcken des ersten Bildbereichs und ein Gesamtbewegungsvektor sind codiert,
- mit dem Gesamtbewegungsvektor wird eine Verschiebung des ersten Bildbereichs im Vergleich zu dem ersten Bildbereich in einem zeitlich vorangegangenen Vorgängerbild und/oder im Vergleich zu dem ersten Bildbereich in einem zeitlich nachfolgenden Nachfolgerbild beschrieben,
- die Decodierung erfolgt derart, daß der Gesamtbewegungsvektor zur Decodierung zumindest eines Teils der Bildblöcke des zweiten Bildbereichs verwendet wird.

**8.** Anordnung nach Anspruch 6 oder 7, bei der der Prozessor derart eingerichtet ist, daß der Gesamtbewegungsvektor aus Bewegungsvektoren von Bildblöcken des ersten Bildbereichs ermittelt wird.

**9.** Anordnung nach Anspruch 8, bei der der Prozessor derart eingerichtet ist, daß der Gesamtbewegungsvektor durch Bildung eines Mittelwerts der Bewegungsvektoren von Bildblökken des ersten Bildbereichs ermittelt wird.

**10.** Anordnung nach Anspruch 8 oder 9, bei der der Prozessor derart eingerichtet ist, daß der Gesamtbewegungsvektor aus Bewegungsvektoren von Bildblöcken des ersten Bildbereichs ermittelt wird, die im wesentlichen an einem Rand des ersten Bildbereichs liegen.

**Claims**

**1.** Method for coding a digitized picture with pixels to which coding information is allocated,

- in which the pixels are grouped into picture blocks,
- in which the picture blocks are grouped to form at least one first picture region and one second picture region,
- in which an overall motion vector is determined, by means of which any displacement of the first picture region in comparison with the first picture region in a chronologically preceding predecessor picture and/or in comparison with the first picture region in a chronologically succeeding successor picture is described,
- in which the overall motion vector is allocated to at least some of the picture blocks in the second picture region,
- in which a motion vector is determined and is allocated to the picture block for each picture block in the first picture region, and
- in which the coding information of the picture blocks, the motion vectors and the overall motion vector are coded.

**2.** Method for decoding a compressed picture with pixels to which coding information is allocated,

- in which the pixels are grouped into picture blocks,
- in which the picture blocks are grouped into at least one first picture region and one second picture region,
- in which the picture blocks, motion vectors of picture blocks in the first picture region and an overall motion vector are coded,
- in which the overall motion vector is used to describe any displacement of the first picture region in comparison with the first picture region in a chronologically preceding predecessor picture and/or in comparison with the first picture region in a chronologically succeeding successor picture,
- in which the decoding is carried out in such a manner that the overall motion vector is used for decoding at least some of the picture blocks in the second picture region.

**3.** Method according to Claim 1 or 2, in which the overall motion vector is determined from motion vectors of picture blocks in the first picture region.

**4.** Method according to Claim 3, in which the overall motion vector is determined by forming a mean value of the motion vectors of picture blocks in the first picture region.

**5.** Method according to Claim 3 or 4, in which the overall motion vector is determined from motion vectors of picture blocks in the first picture region which are located essentially at an edge of the first picture region.

**6.** Arrangement for coding a digitized picture with pixels to which coding information is allocated, having a processor (202, 203) which is set up such that the following steps can be carried out:

- the pixels are grouped into picture blocks,
- the picture blocks are grouped to form at least one first picture region and one second picture region,
- an overall motion vector is determined, by means of which any displacement of the first picture region in comparison with the first picture region in a chronologically preceding predecessor picture and/or in comparison with the first picture region in a chronologically succeeding successor picture is described,
- the overall motion vector is allocated to at least some of the picture blocks in the second picture region,
- a motion vector is determined and is allocated to the picture block for each picture block in the first picture region, and
- the coding information of the picture blocks, the motion vectors and the overall motion vector are coded.

**7.** Arrangement for decoding a compressed picture with pixels to which coding information is allocated, having a processor (208, 209) which is set up such that the following steps can be carried out:

- the pixels are grouped into picture blocks,
- the picture blocks are grouped into at least one first picture region and one second picture region,
- the picture blocks, motion vectors of picture blocks in the first picture region and an overall motion vector are coded,
- the overall motion vector is used to describe any displacement of the first picture region in comparison with the first picture region in a chronologically preceding predecessor picture and/or in comparison with the first picture region in a chronologically succeeding successor picture,
- the decoding is carried out in such a manner that the overall motion vector is used for decoding at least some of the picture blocks in the second picture region.

**8.** Arrangement according to Claim 6 or 7, in which the processor is set up such that the overall motion vector is determined from motion vectors of picture blocks in the first picture region.

**9.** Arrangement according to Claim 8, in which the processor is set up such that the overall motion vector is determined by forming a mean value of the motion vectors of picture blocks in the first picture region.

**10.** Arrangement according to Claim 8 or 9, in which the processor is set up such that the overall motion vector is determined from motion vectors of picture blocks in the first picture region which are located essentially at an edge of the first picture region.

**Revendications**

**1.** Procédé destiné au codage d'une image numérisée ayant des points images auxquels des informations de codage sont affectées,

- dans lequel les points images sont groupés en blocs images,
- dans lequel les blocs images sont groupés en au moins une première région de l'image et une deuxième région de l'image,
- dans lequel on détermine un vecteur de déplacement total par lequel on décrit une translation de la première région de l'image par rapport à la première région de l'image dans une image antérieure qui précède dans le temps et/ou par rapport à la première région de l'image dans une image postérieure qui succède dans le temps,
- dans lequel le vecteur de déplacement total est affecté à au moins une partie des blocs images de la deuxième région de l'image,
- dans lequel, pour chaque bloc image de la première région de l'image, on détermine un vecteur de déplacement respectif et on l'affecte au bloc image et
- dans lequel on code les informations de codage des blocs images, les vecteurs de déplacement, ainsi que les vecteurs de déplacement total.

**2.** Procédé destiné au décodage d'une image numérisée ayant des points images auxquels des informations de codage sont affectées,

- dans lequel les points images sont groupés en blocs images,
- dans lequel les blocs images sont groupés en au moins une première région de l'image et une deuxième région de l'image,
- dans lequel sont codés les blocs images, les vecteurs de déplacement de blocs images de la première région de l'image et un vecteur de déplacement total,
- dans lequel on décrit avec le vecteur de déplacement total une translation de la première région de l'image par rapport à la première région de l'image dans une image antérieure qui précède dans le temps et/ou par rapport à la première région de l'image dans une image postérieure qui succède dans le temps,

- dans lequel le décodage est effectué de telle manière que le vecteur de déplacement total est utilisé pour au moins une partie des blocs images de la deuxième région de l'image.

3. Procédé selon la revendication 1 ou 2
dans lequel le vecteur de déplacement total est déterminé à partir de vecteurs de déplacement de blocs images de la première région de l'image.

4. Procédé selon la revendication 3
dans lequel le vecteur de déplacement total est déterminé par formation d'une valeur moyenne des vecteurs de déplacement de blocs images de la première région de l'image.

5. Procédé selon la revendication 3 ou 4
dans lequel le vecteur de déplacement total est déterminé à partir de vecteurs de déplacement de blocs images de la première région de l'image, qui se trouvent pour l'essentiel sur le bord de la première région de l'image.

6. Dispositif destiné au codage d'une image numérisée avec des points image auxquels correspondent des informations de codage, comportant un processeur (202, 203) conçu de telle sorte que les étapes suivantes peuvent être exécutées:

- les points images sont groupés en blocs images,
- les blocs images sont groupés en au moins une première région de l'image et une deuxième région de l'image,
- on détermine un vecteur de déplacement total par lequel on décrit une translation de la première région de l'image par rapport à la première région de l'image dans une image antérieure qui précède dans le temps et/ou par rapport à la première région de l'image dans une image postérieure qui succède dans le temps,
- le vecteur de déplacement total est affecté à au moins une partie des blocs images de la deuxième région de l'image,
- pour chaque bloc image de la première région de l'image, on détermine un vecteur de déplacement respectif et on l'affecte au bloc image et
- on code les informations de codage des blocs images, les vecteurs de déplacement, ainsi que le vecteur de déplacement total.

7. Dispositif destiné au décodage d'une image comprimée ayant des points images auxquels correspondent des informations de codage, comportant un processeur (208, 209) conçu de telle sorte que les étapes suivantes peuvent être exécutées:

- les points images sont groupés en blocs images,
- les blocs images sont groupés en au moins une première région de l'image et une deuxième région de l'image,
- les blocs images, les vecteurs de déplacement de blocs images de la première région de l'image et un vecteur de déplacement total sont codés,
- avec le vecteur de déplacement total, on décrit une translation de la première région de l'image par rapport à la première région de l'image dans une image antérieure qui précède dans le temps et/ou par rapport à la première région de l'image dans une image postérieure qui succède dans le temps,
- le décodage est effectué de telle sorte que le vecteur de déplacement total est utilisé pour le décodage d'au moins une partie des blocs images de la deuxième région de l'image.

8. Dispositif selon la revendication 6 ou 7
dans lequel le processeur est conçu de telle sorte que le vecteur de déplacement total est déterminé à partir de vecteurs de déplacement de blocs images de la première région de l'image.

9. Dispositif selon la revendication 8
dans lequel le processeur est conçu de telle sorte que le vecteur de déplacement total est déterminé par formation d'une valeur moyenne des vecteurs de déplacement de blocs images de la première région de l'image.

10. Dispositif selon la revendication 8 ou 9
dans lequel le processeur est conçu de telle sorte que le vecteur de déplacement total est déterminé à partir de vecteurs de déplacement de blocs images de la première région de l'image, qui se trouvent essentiellement sur le bord de la première région de l'image.

FIG 1

# FIG 2

EP 1 110 407 B1

FIG 3

## FIG 4

**401**

Bewegungsschätzung für jeden Bildblock des ersten Bildbereichs

**402**

Ermittlung eines Gesamtbewegungsvektors aus den Bewegungsvektoren

**403**

Codierung der Codierungsinformationen, der Bewegungsvektoren des ersten Bildbereichs, sowie des Gesamtbewegungsvektors

**404**

Übertragung der Codierungsinformationen, der Bewegungsvektoren des ersten Bildbereichs sowie des Gesamtbewegungsvektors

**405**

Empfangen der Codierungsinformationen, der Bewegungsvektoren des ersten Bildbereichs sowie des Gesamtbewegungsvektors

**406**

Decodierung und Rekonstruktion